Europäisches Patentamt

European Patent Office

Office européen des brevets

(19)

(11) Veröffentlichungsnummer : **0 103 821**
**B1**

(12)

# EUROPÄISCHE PATENTSCHRIFT

(45) Veröffentlichungstag der Patentschrift :
06.07.88

(21) Anmeldenummer : 83108899.2

(22) Anmeldetag : 08.09.83

(51) Int. Cl.⁴ : **H 02 K 29/06**, H 02 K 19/06,
H 02 K 19/20, F 02 N 11/04

(54) **Nach dem Reluktanz-Prinzip arbeitender Motor-Generator.**

(30) Priorität : 09.09.82 DE 3233502

(43) Veröffentlichungstag der Anmeldung :
28.03.84 Patentblatt 84/13

(45) Bekanntmachung des Hinweises auf die Patenterteilung : 06.07.88 Patentblatt 88/27

(84) Benannte Vertragsstaaten :
AT DE FR GB IT SE

(56) Entgegenhaltungen :
CH-A-   413 084
FR-A- 2 480 042
US-A- 4 051 417

(73) Patentinhaber : Siemens Aktiengesellschaft Berlin
und München
Wittelsbacherplatz 2
D-8000 München 2 (DE)

(72) Erfinder : Freise, Werner, Prof. Dr.-Ing.
Spinozastrasse 31
D-6750 Kaiserslautern (DE)
Erfinder : Fischer, Herbert, Dipl.-Ing.
Schifferstrasse 2
D-6714 Weisenheim/Sd (DE)

EP 0 103 821 B1

Jouve, 18, rue St-Denis, 75001 Paris, France

## Beschreibung

Die Erfindung bezieht sich auf einen nach dem Reluktanz-Prinzip arbeitenden Motor-Generator, insbesondere mit Schwungmassen-Rotor ; ein derartiger Motor-Generator ist aus der DE-A-29 17 138 bekannt.

Bei dem bekannten, in Verbindung mit einer Kraftfahrzeug-Brennkraftmaschine vorgesehenen Motor-Generator bildet die der Kurbelwelle zu- bzw. abkuppelbare Schwungmasse gleichzeitig den wicklungslosen, nach dem Reluktanz-Prinzip arbeitenden Rotor des Motor-Generators ; der nicht näher beschriebene Stator soll an der Brennkraftmaschine bzw. am Getriebegehäuse befestigt werden. Die Schwungmasse ist durch eine zusätzliche Kupplung von der Kurbelwelle abkuppelbar und im abgekuppelten Zustand relativ zur Kurbelwelle drehbar.

Bei kurzzeitigen Stillständen, wie z. B. bei Ampelstopps o. dgl. wird die Schwungmasse von der Brennkraftmaschine abgekuppelt, so daß die Schwungmasse auch bei abgestellter Brennkraftmaschine weiter rotieren kann. Beim anschließenden Wiederanfahren wird die Schwungmasse zum Starten der Brennkraftmaschine wieder an die Brennkraftmaschine angekuppelt. Zusätzlich ist vorgesehen, daß die Schwungmasse bei kurzzeitigen Stillständen des Kraftfahrzeuges durch den Motor-Generator auf einer bestimmten Drehzahl gehalten wird, die ausreicht, um nach dem Wiederankuppeln an die Brennkraftmaschine deren Start gewährleisten zu können. In der Betriebszuständen, in denen die Brennkraftmaschine in Betrieb ist, wird der Motor-Generator auf Generatorbetrieb umgeschaltet und speist elektrische Leistung z. B. in die Fahrzeugbatterie.

Durch die CH-A-413 084 ist ein nach dem Reluktanz-Prinzip arbeitender Motor-Generator mit einer Statoranordnung bekannt, die aus zumindest zwei gleichartig gezahnten, in axialem Abstand und mit axial fluchtenden Zähnen hintereinander angeordneten radial außen magnetisch leitend verbundenen Stator-Elementen besteht, denen gleichzeitig auch der Erregung dienenden Arbeitswicklungen zugeordnet sind, sowie mit einer Rotoranordnung, die mehrere über den Umfang gleichmäßig verteilte, in magnetisch leitender Verbindung stehende Zahnreihen aufweist.

Durch die FR-A-2 480 042 ist ein nach dem Reluktanz-Prinzip arbeitender Lichtmaschinen-Generator mit axial durchgehendem Stator und Rotor, der über den gesamten Umfang gezahnt ist, bekannt.

Aufgabe der vorliegenden Erfindung ist es, mit geringem fertigungs- und schaltungstechnischen Aufwand eine praktische, in ihren mechanischen, elektromagnetischen und schaltungstechnischen Daten optimal aufeinander abgestimmte Lösung für einen Motor-Generator der eingangs genannten Art realisieren zu können.

Die Lösung dieser Aufgabe ist bei einem Motor-Generator der eingangs genannten Art durch die Lehre des Patentanspruchs 1 bzw. des Patentanspruchs 2 möglich. Die Gegenstände der Unteransprüche kennzeichnen vorteilhafte Ausgestaltungen der Erfindung.

Die erfindungsgemäße Bauweise eines Motor-Generators erlaubt unter vorteilhafter Mitbenutzung der einen relativ großen Durchmesser aufweisenden Motorbauteile des Motorkurbelgehäuses bzw. der Kupplungsschwungscheibe als direkte Stator- bzw. Rotorbauteile aufgrund seiner nur jeweils einen geringen Teil des Umfangs belegenden und somit nicht als geschlossenes Ringgebilde ausgebildeten Sektorstatoren mit den einfach anzubringenden und eine niedrige Erregerverlustleistung gewährleistenden Erregerwicklungen in Zusammenarbeit mit den wicklungslosen, gleichartig gezahnten Rotorzahnrädern mit geringer Jochhöhe eine mit geringem Wicklungs- und Schaltungsaufbau herstellbaren und einfachst montierbaren Motor-Generator, bei dem die tangentialen Zwischenräume beidseitig der Sektorstatoren außerdem in konstruktiv vorteilhafter Weise für weitere Motorbefestigungsteile, z. B. Verbindungsbolzen zwischen Verbrennungsmaschine und Getriebe, frei bleiben.

Die Zähne der einen Hälfte jedes Sektorstator-Elementes sind gegenüber den Zähnen der anderen Hälfte dieses Sektorstator-Elementes durch einen mittigen, um eine halbe Zahnteilung vergrößerten Zahnabstand räumlich um 90° el. und die Zähne der gleichartig über den gesamten Umfang gezahnten Rotor-Zahnreihen gegeneinander um eine halbe Zahnteilung nach dem Prinzip « Zahn auf Lücke » gegeneinander versetzt.

In wicklungstechnisch günstiger Weise wird dadurch eine Kreuzung der Wickelköpfe der Wicklungsstränge verhindert, wenn man die Arbeitswicklung jedes Statorsektors als gradzahlig-, insbesondere 4-strängige Synchronmotor-Wicklung mit jeweils um 90° el. gegeneinander versetzten Wicklungssträngen gleicher Spulenweite ausbildet.

Durch die vorgesehene Umwicklung eines Zahnes durch zwei in Phasenopposition geschaltete Stränge wird in vorteilhafter Weise die Entstehung räumlich stillstehender Wechselfelder und dadurch bedingter Bremsmomente vermieden. Gleichzeitig ergibt sich in vorteilhafter Weise die Möglichkeit, bei voller Funktionstüchtigkeit jeden Strang der Arbeitswicklung im Motor- bzw. Generatorbetrieb betriebsmäßig nur jeweils mit einem nur in einer Richtung fließenden Strom zu speisen und dementsprechend nur ein einziges Halbleiterbauelement im Speiseweg jedes Stranges vorzusehen.

Zur weiteren Minderung des notwendigen Schaltungsaufwandes ist nach einer Ausgestaltung der Erfindung vorgesehen, daß zur Kommutierung der aus einer Gleichspannungsquelle, insbesondere einer Batterie gespeisten Wicklungsstränge der Arbeitswicklung im Motorbetrieb eine elektronische Schaltung mit MOS-Transistoren verwendet wird, deren Inversdioden im Generator-Betrieb als Gleichrichterdioden zur Gleichrichtung des generatorischen Wechselstroms mitbenutzt werden. Zweckmäßigerweise werden die zur Kommutierung der Wicklungsstränge vorgesehenen elektronischen Schaltelemente noch zusätzlich durch entsprechende Taktung zur Stromregelung, insbesondere zur Strombegrenzung hinzugezogen. In den Freilaufzweigen sind nach einer Ausgestaltung der Erfindung steuerbare Halbleiter, insbesondere ebenfalls MOS-Transistoren mit in Reihe geschalteten Dioden vorgesehen, die im Motorbetrieb die Wirkung der Inversdioden dieser MOS-Transistoren kompensieren.

Die Erfindung sowie weitere vorteilhafte Ausgestaltungen der Erfindung werden im folgenden anhand eines schematisch dargestellten Ausführungsbeispiels in der Zeichnung näher erläutert. Darin zeigen:

Fig. 1 eine stirnseitige Draufsicht auf einen Sektorstator,

Fig. 2 den in die Verbrennungsmaschine eines Kraftfahrzeuges eingebauten Sektorstator nach Fig. 1 im Seitenschnitt gemäß Schnittverlauf II-II in Fig. 1,

Fig. 3 die Verschaltung der Arbeitswicklung des Sektorstators anhand eines Schnittbildes gemäß Schnittverlauf III-III in Fig. 1,

Fig. 4 eine Taktgeber-Schaltvorrichtung zur Kommutierung und gegebenenfalls Strombegrenzung der Arbeitswicklung des Sektorstators,

Fig. 5 den Stromfluß in einem Wicklungsstrang der Arbeitswicklung des Sektorstators im Motorbetrieb,

Fig. 6 den Stromfluß in einem Wicklungsstrang der Arbeitswicklung des Sektorstators im Generatorbetrieb,

Fig. 7 eine stirnseitige Draufsicht auf eine weitere Sektorstator-Ausführung,

Fig. 8 die bohrungsseitige Draufsicht auf den Sektorstator gemäß Fig. 7,

Fig. 9 eine gegenüber der Ausführung gemäß Fig. 4 vereinfachte Taktgeber-Schaltvorrichtung,

Fig. 10 eine bohrungsseitige Draufsicht auf einen Sektorstator mit insgesamt zwölf Zähnen, von denen jeder Zahn einzeln von den ihm zugeordneten Wicklungssträngen umwickelt ist,

Fig. 11 eine, z. B. einem Sektorstator gemäß Fig. 10 zugeordnete, Rotorausführung, bei der die Zähne der beiden Rotorzahnreihen zueinander abweichend von dem genauen Prinzip « Zahn auf Lücke » angeordnet sind.

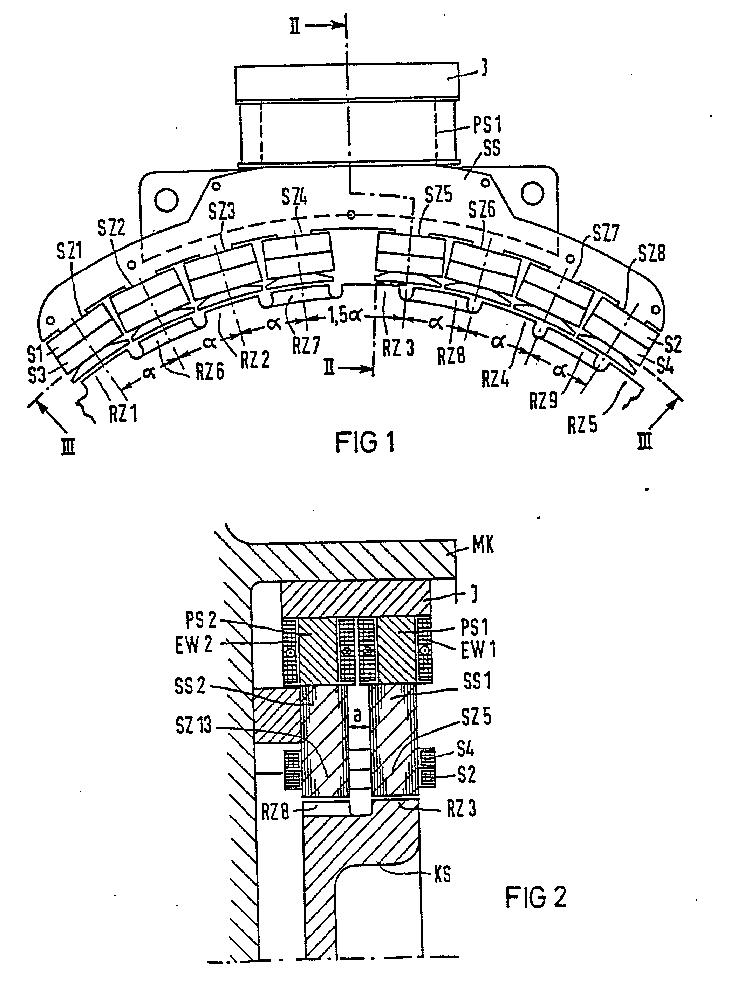

Fig. 1 zeigt in einer axialen stirnseitigen Draufsicht einen einzelnen Sektorstator SS, der gemäß Fig. 2 z. B. an dem Motorkurbelgehäuse MK einer Kfz-Verbrennungsmaschine befestigt ist und sich über einen Winkel von hier ca. 70° der als Rotor mitbenutzten Kupplungsscheibe KS der Verbrennungsmaschine erstreckt. Obwohl die Funktionstüchtigkeit des erfindungsgemäßen Motor-Generators auch bei nur einem einzigen Sektorstator am gesamten Umfang an sich gegeben ist, werden zweckmäßigerweise jeweils paarweise in tangentialem Abstand zueinander angeordnete Sektorstatoren am Umfang des Motorkurbelgehäuses MK derart angeordnet, daß bei elektrischer Zusammenschaltung der am Umfang verteilten Sektorstatoren die in jeweils einem Strang induzierten Spannungen insgesamt gleichphasig sind.

Der in Fig. 1 dargestellte Sektorstator besteht, wie insbesondere aus Fig. 2 ersichtlich, aus zwei hintereinander in axialem Abstand a magnetisch gegeneinander isolierten Sektorstator-Elementen SS1 bzw. SS2. Jedes Sektorstator-Elementes SS1 bzw. SS2 ist mit insgesamt acht Zähnen SZ1-SZ8 bzw. SZ9-SZ16 versehen. Die Zähne des ersten Sektorstator-Elementes SS1 sind axial fluchtend zu den Zähnen des zweiten Sektorstator-Elementes SS2 angeordnet. Jedes Sektorstator-Element SS1 bzw. SS2 ist hinsichtlich der Zahnteilung in eine linke Zahngruppe mit den vorderen, in Fig. 1 sichtbaren Zähnen SZ1-SZ4 und den nicht sichtbaren axial fluchtend dahinter liegenden Zähnen SZ9-SZ12 und in eine rechte Zahngruppe mit den in Fig. 1 sichtbaren Zähnen SZ5-SZ8 des vorderen Sektorstator-Elementes SS1 und den nicht sichtbaren, axial fluchtend dahinter liegenden Zähnen SZ13-SZ16 des zweiten Sektorstator-Elementes SS2 unterteilt. Die Zähne der linken Zahngruppe und die Zähne der rechten Zahngruppe weisen untereinander den gleichen Zahnabstand auf; die linke Zahngruppe ist gegenüber der rechten Zahngruppe durch einen mittigen, um eine halbe Zahnteilung vergrößerten Zahnabstand räumlich um 90° el. versetzt angeordnet.

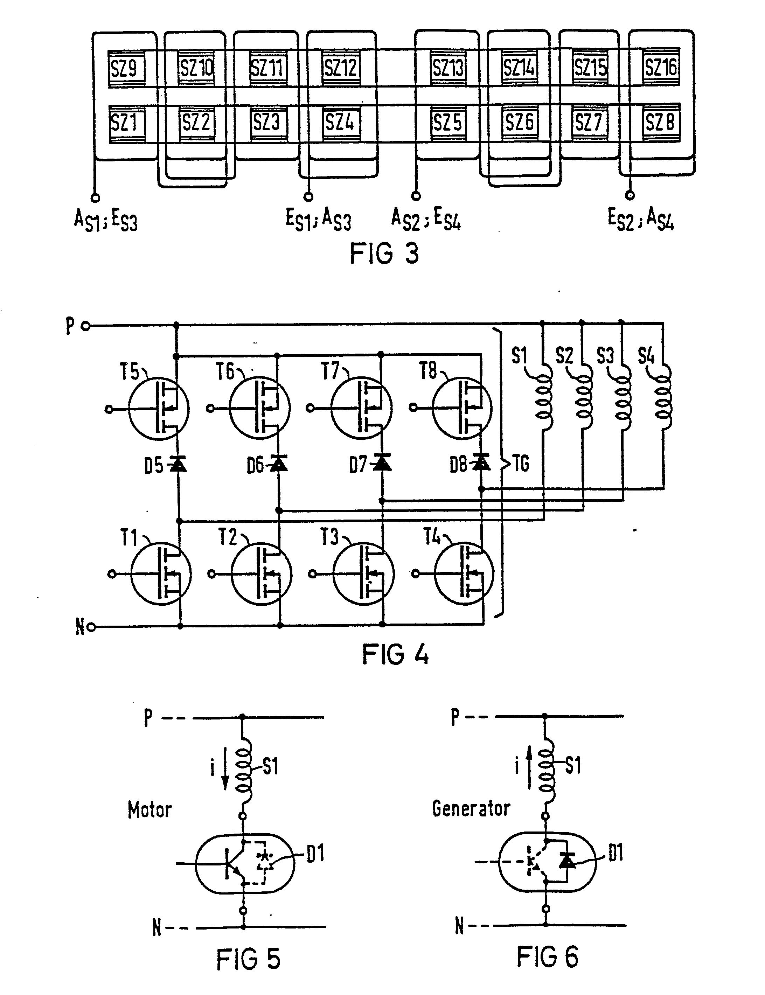

Als Stator-Arbeitswicklung ist eine 4-strängige Wicklung mit jeweils um 90° el. gegeneinander versetzten Wicklungssträngen S1, S2, S3, S4 gleicher Spulenweite vorgesehen. Diese Versetzung entspricht der üblichen Versetzung $2\pi/m$ (mit m = Strangzahl) der Wicklungsstränge einer elektrischen Maschine. Die Wicklungsstränge S1 und S3 sind um die Zähne der linken Zahngruppe des Sektorstators SS und die Wicklungsstränge S2 und S4 um die Zähne der rechten Zahngruppe des Sektorstators SS gewickelt. Eine erfindungsgemäße Anordnung und Verschaltung der Wicklungsstränge S1-S4 ergibt sich insbesondere aus der Statorabwicklung gemäß Fig. 3, in der jeweils der Anfang A bzw. das Ende E jedes Wicklungsstranges S1-S4 gekennzeichnet sind.

Jedes Sektorstator-Element SS1 bzw. SS2 mündet in einem radial überstehenden Polschenkel PS1 bzw. PS2, der jeweils von einem konzentrierten Erregerwicklungsteil EW1 bzw. EW2 umschlungen ist, der vorteilhafterweise als radial aufsteckbare Formspule ausgebildet ist. Die Erregerwicklungsteile EW1 bzw. EW2 sind — wie auch aus Fig. 2 ersichtlich — derart an eine, gegebenenfalls steuerbare Gleichspannung angeschlossen, daß sich in den zwischen den Sektorstator-Elementen SS1 und SS2 liegenden Spulenseiten die gleiche Stromrichtung ergibt. Die Polenden der Polschenkel PS1 und PS2 sind durch ein Rückschlußjoch J verbunden.

Als Rotor ist der äußere Umfang des Kupplungs-Schwungrades KS derart mitbenutzt, daß am Umfang der Kupplungs-Schwungscheibe zwei den Zahnreihen des ersten und zweiten Sektorstator-Elementes SS1 bzw. SS2 zugeordnete Zahnreihen vorgesehen sind, von denen in Fig. 1 die Zähne RZ1-RZ5 der vorderen und die Zähne RZ6-RZ9 der hinteren Zahnreihe ersichtlich sind. Beide Zahnreihen stehen in magnetisch leitender Verbindung, indem sie — z. B. im Ausführungsbeispiel gemäß Fig. 2 — Teile der massiven Stahl-Kupplungs-Schwungscheibe KS sind. Beide Zahnreihen der Kupplungs-Schwungscheibe KS weisen über den gesamten Umfang je für sich eine mit dem Doppelten der Zahnteilung des Sektorstators SS übereinstimmende Zahnteilung auf, jedoch sind die Zähne der einen Zahnreihe gegenüber den Zähnen der anderen Zahnreihe um eine halbe Zahnteilung nach dem Prinzip « Zahn auf Lücke » gegeneinander versetzt, so daß in der Axialschicht die Zähne beider Zahnreihen wechselweise im Abstand am Umfang aufeinanderfolgen.

Bei der zuvor beschriebenen erfindungsgemäßen Ausführung eines Motor-Generators ergibt sich ein erfindungsspezifischer Flußverlauf derart, daß sich die Feldlinien des Erregerkreises beispielsweise aus den Zähnen einer Rotorzahnreihe austretend, über den Luftspalt in das davorstehende Sektorstator-Element SS1 bzw. SS2 eintretend, über die Polschenkel PS1 bzw. PS2 und das Joch J gesammelt, weiter über das axial versetzte Sektorstator-Element, über dessen Zähne und über den davorliegenden Luftspalt sowie durch die Zähne der anderen Rotorzahnreihe und schließlich axial zurück zur Ausgangs-Rotorzahnreihe schließen. Das Feld der Arbeitswicklung verläuft im wesentlichen in an sich bekannter Weise jeweils in ein- und derselben axialen Ebene.

Die Bündelung des Erregerflusses in die Polschenkel ermöglicht eine besonders niedrige Erregerverlustleistung. Die Gleichpoligkeit jeder Rotorzahnreihe erlaubt eine ungeblechte Massivausführung des gesamten Rotors, was im Interesse der Festigkeit und einer niedrigen Rotor-Jochhöhe von besonderem Vorteil ist.

In vorteilhafter Weise sind auch das Rückschlußjoch J und die Polschenkel PS1 bzw. PS2 ungeblecht ausgeführt. Um die vorteilhafterweise in Form von Formspulen vorgefertigten Spulen der Wicklungsstränge S1-S4 in einfacher Weise einbringen zu können, werden zweckmäßigerweise die Zähne der Sektorstator-Elemente als Ganzes oder als Teil getrennt hergestellt, insbesondere als zusammenhängende linke bzw. rechte Zahngruppe gestanzt, bewickelt und dann an den restlichen Sektorstator-Teilen befestigt.

Fig. 4 zeigt in vorteilhafter Weise die Schaltungsvorrichtung (Taktgeber TG) zur Kommutierung (Fortschaltung) der Wicklungsstränge S1-S4 der Arbeitswicklung des Sektorstators SS. Dazu ist zunächst in Reihe mit jedem Wicklungsstrang S1-S4 jeweils ein steuerbares Halbleiterelement in Form eines MOS-Transistors T1-T4 geschaltet. Diese Reihenschaltung liegt an der im Motorbetrieb speisenden und im Generatorbetrieb gespeisten Gleichspannungsquelle PN.U.a. zur Erzielung möglichst kleiner Spannungsabfälle in der Kommutierung ist jeweils nur eine einzige Halbleiterstrecke in jedem Stromkreis wirksam ; in vorteilhafter Weise wird diese Halbleiterstrecke sowohl für die Wicklungsfortschaltung der Wicklungsstränge S1-S4 als auch zur Strombegrenzung der in diesen Wicklungssträngen fließenden Ströme benutzt.

Fig. 5 zeigt in weiter vereinfachter schematischer Darstellung den Stromfluß i im Wicklungsstrang S1 im Motorbetrieb wenn das Gate der MOS-Transistoren gegenüber Source positiv ist. Fig. 6 zeigt die gleiche Schaltung mit in umgekehrter Richtung fließendem Strom bei Generatorbetrieb, in dem die Inversdiode D1 in vorteilhafter Weise leitend wird, ohne daß dazu eine gesteuerte Spannung an das Gate des MOS-Transistors gelegt werden muß.

Um zu vermeiden, daß der Strom bei niedrigen Drehzahlen und damit niedrigen induzierten Spannungen für die Wicklungsstränge S1-S4 und die MOS-Transistoren unzulässig groß wird, werden nach einer Ausgestaltung der Erfindung die MOS-Transistoren im Sinne einer gewünschten Strombegrenzung getaktet ein- bzw. ausgeschaltet. Dadurch kann ein besonderer Strombegrenzungs-Transistor in der gemeinsamen Zuleitung vermieden und insbesondere ein zusätzlicher, bei den üblichen niedrigen Netzspannungen des Motor-Generators eine deutliche Wirkungsgradeinbuße verursachender Spannungsabfall vermieden werden.

Die Weiterführung des Stromes in den einzelnen Wicklungssträngen während der Ausschaltzeiten der MOS-Transistoren T1-T4 wird durch gesteuerte Freilauftransistoren in Form von MOS-Transistoren T5-T8 gewährleistet, die synchron zu den MOS-Transistoren T1-T4 vom gleichen Taktgeber oder von der gleichen Rotorlage-Erfassung mit kleiner Nachlaufzeit durchlässig geschaltet werden. Zu den Freilauftransistoren T5-T8 liegen jeweils in Reihe die Dioden D5-D8, die die Inversdioden dieser MOS-Transistoren T5-T8 in ihrer Wirkung kompensieren sollen.

Die Ansteuerung der MOS-Transistoren T1-T4 und damit die Freischaltung der Wicklungsstränge S1-S4 sowie die Einschaltung der Freilauftransistoren T5-T8 kann in Abhängigkeit von einer Rotorlage-Erfassungseinrichtung oder nach einem vorgegebenen Taktfrequenzprogramm unter Einsparung einer besonderen Rotorlage-Erfassungseinrichtung erfolgen.

Wie bereits erwähnt, ergibt sich bei einer Sektorstator-Ausführung gemäß Fig. 1, bei der die Zähne der einen Hälfte jedes Sektorstator-Elementes räumlich gegenüber den Zähnen der anderen Hälfte dieses Sektorstator-Elementes durch einen mittigen, um eine halbe Zahnteilung vergrößerten Zahnabstand um 90° el. versetzt sind und bei der sämtliche Stränge der Arbeitswicklung in einem Sektorstator vorkommen, auch eine volle Funktionstüchtigkeit des erfindungsgemäßen Motor-Generators, wenn nur ein einziger Sektorstator am Umfang vorgesehen ist. Zweckmäßigerweise wird man jedoch zur Vermeidung von radial auf die Rotorlager wirkenden magnetischen Zugkräften dafür sorgen, daß sich jeweils zwei Sektorstatoren am Umfang möglichst genau gegenüberliegen ; dies bedingt jedoch einen zusätzlichen Aufwand an Wicklungsverbindungen zwischen den zugehörigen Sektorstatoren.

In besonders vorteilhafter Weise kann der zusätzliche Wicklungsaufwand vermieden und gleichzeitig eine große Freizügigkeit hinsichtlich der Anordnung der Sektorstatoren am Umfang mit Rücksicht auf bereits vorhandene Raumbelegungen, z. B. durch nichtveränderbare Lage von Verbindungsschrauben zwischen Verbrennungsmotor und Getriebe, und ein besonders einfacher konstruktiver Aufbau der Sektorstatoren durch eine Ausgestaltung der Erfindung erreicht werden, die durch folgende Merkmale gekennzeichnet ist :

a) Die Zähne (SZ1-SZ8 bzw. SZ9-SZ16) jedes Sektorstator-Elementes sind gleichmäßig über jedes Sektorstator-Element und gleichartig in beiden Sektorstator-Elementen verteilt,

b) es sind zumindest zwei Sektorstatoren am Bohrungsumfang vorgesehen, wobei die beiden Sektorstatoren um ein ungerades Vielfaches der halben Statorzahnteilung ($\alpha$) von der genauen Diametrallage abweichen,

c) die gesamte Arbeitswicklung besteht aus einer geraden Zahl von Strängen, wobei jeweils die halbe Zahl der Stränge je einem der beiden Sektorstatoren zugeordnet ist.

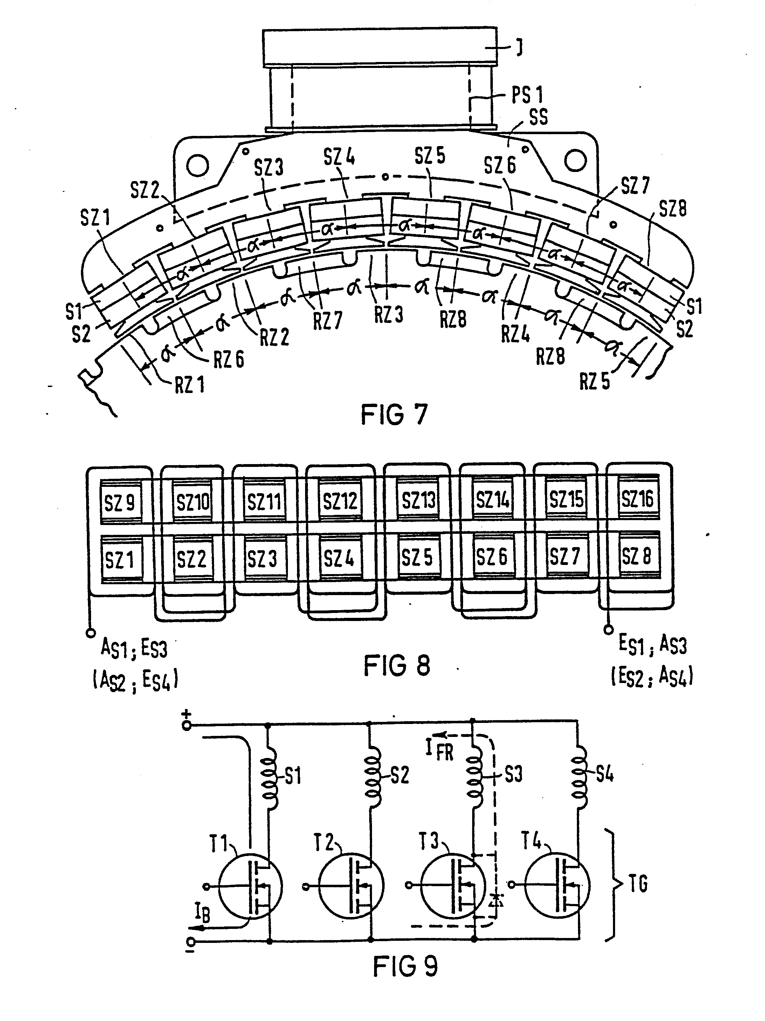

Ein dementsprechend aufgebauter einzelner Sektorstator ist in stirnseitiger und bohrungsseitiger Draufsicht in Fig. 7 bzw. Fig. 8 dargestellt, wobei sich die in Fig. 8 in Klammern angegebenen Anschlüsse auf die Wicklung des zweiten, hier nicht dargestellten Sektorstators beziehen, der bis auf die zuvor genannte Abweichung zu dem ersten, in Fig. 7 dargestellten Sektorstator gegenüberliegend am Bohrungsumfang angeordnet ist. Es ergibt sich, daß in dem bis auf die Abweichung gegenüberliegenden zweiten Sektorstator mit den Strängen S2 und S4 ebenfalls wie in Fig. 1 infolge der versetzten Anordnung um 90° el. versetzte Spannungen gegenüber denen der Wicklungsstränge S1 und S3 im anderen Sektorstator induziert werden.

Die vorgenannte Variante gilt mit ihren Zahl- und Winkelangaben natürlich für die bisher vorzugsweise betrachtete zwei- oder viersträngige Ausführung mit einer elektrischen Verschiebung von 90° el. Man kann diese grundsätzliche Lösung auch auf andere, insbesondere drei- oder sechssträngige Anordnungen übertragen, bei denen dann entsprechend mehr Sektorstatoren der unter a) beschriebenen Form notwendig werden und die unter Beachtung der allgemein bekannten Regeln für eine Drehfelderzeugung im Sinne möglichst insgesamt geringer radialer magnetischer Zugbelastungen sämtlicher Sektorstatoren mit einem gegenseitigen Umfangsversatzwinkel :

$$\gamma = \alpha \cdot [n \pm (1/m)]$$ angeordnet sind ; dabei gilt :
$\alpha = 360°/2p$ ; $n$ = natürliche Zahl ; $m$ = Strang-(Phasen) Zahl ; $p$ = Polpaarzahl.

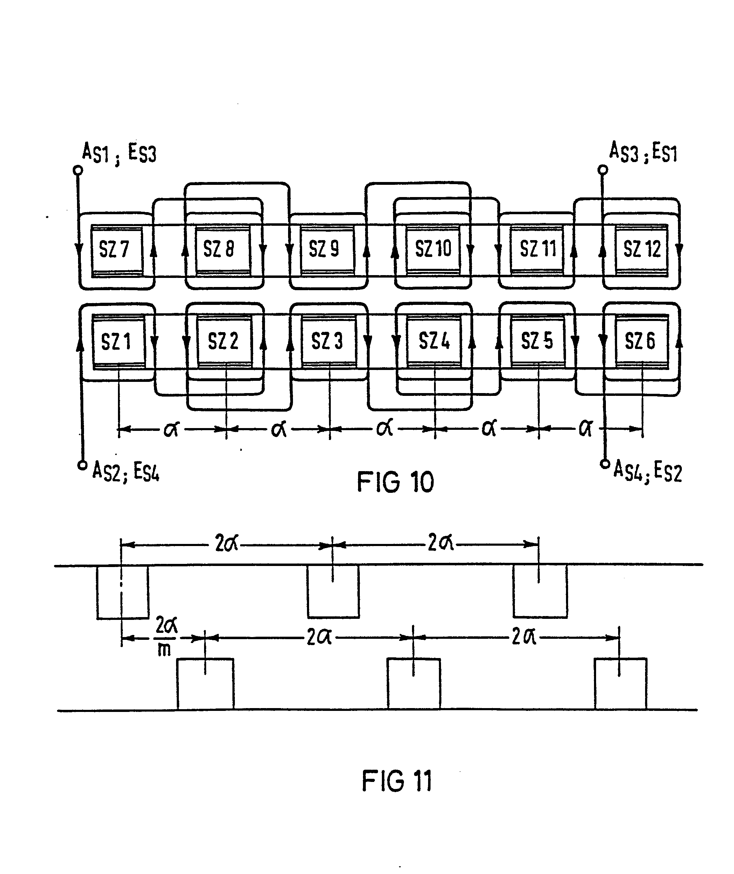

Während nach den Ausführungen gemäß Fig. 1 und Fig. 3 jeweils zwei axial hintereinander angeordnete, den verschiedenen Sektorstator-Elementen eines Sektorstators zugehörige Zähne gemeinsam von gegenphasigen Wicklungssträngen umschlungen sind, ist bei der Ausführung gemäß Fig. 10 jeweils jeder Zahn jedes Sektorstator-Elementes einzeln von den ihnen zugeordneten Strängen umschlungen. Eine derartige Ausführung der Arbeitswicklung ist insbesondere dann vorteilhaft, wenn z. B. aus konstruktiven oder elektrischen Gründen ein größerer axialer Abstand zwischen den Sektorstatorelementen eines Sektorstators einen zu hohen Verbrauch an Wicklungskupfer aufgrund der für je zwei hintereinander angeordnete Zähne gemeinsamen Wicklungen bedingen würde. Die in Fig. 10 dargestellte Einzelbewicklung der Zähne bietet sich in weiterer vorteilhafter Ausgestaltung, insbesondere in Kombination mit einer Rotorzahnteilung gemäß Fig. 11 an, die dadurch gekennzeichnet ist, daß zwar wiederum jede Rotorzahnreihe über ihren Umfang mit einer gleichmäßigen Zahnteilung $2\alpha = 2(360°/2p)$ mit $p$ = Polpaarzahl der Stator-Arbeitswicklung versehen ist, jedoch die Rotorzahnreihen gegenseitig um den Winkel $2\alpha/m$ mit $m$ = Strang- bzw. Phasenzahl der Stator-Arbeitswicklung gegeneinander am Umfang versetzt sind. Durch die vorgenannte Anordnung der Rotorzahnreihen lassen sich z. B. magnetisch angeregte Geräusche weitgehend vermeiden.

Als Alternativausführung zu den in Fig. 1, 2 bzw. Fig. 7 dargestellten konstruktiven Ausführungen der Sektorstator-Elemente kann es zur Vermeidung störender Restluftspalte zweckmäßig sein, die Polschenkel PS1 bzw. PS2 nicht als Massivteile sondern entweder zusammen mit dem Joch J als einziges U-förmiges massives oder geblechtes Bauteil auszuführen oder die Polschenkel als geblechte Bestandteile der Sektorstator-Elemente SS1 bzw. SS2 vorzusehen.

Der konstruktive und wicklungstechnische Aufbau des erfindungsgemäßen Motor-Generators bei jeweils zwei in magnetisch enger Kopplung, z. B. in gleichen Nuten, eingebrachten, dem gleichen Statorzahn jeweils zugeordneten und in Gegenphase von der elektronischen Schaltvorrichtung TG angesteuerten Wicklungssträngen erlaubt dadurch eine weitere Minderung des elektronischen Steueraufwandes, daß jeweils zum Strom-Freilauf eines gerade abgeschalteten Wicklungsstranges der Strompfad über die Inversdiode des magnetisch eng gekoppelten, um 180° elektrisch versetzten Wicklungsstranges vorgesehen ist. Es erübrigen sich dann gesonderte Freilaufkreise mit zusätzlichen Transistoren bzw. Dioden.

Fig. 9 zeigt eine derart vereinfachte elektronische Schaltvorrichtung TG für eine Arbeitswicklung mit vier Wicklungssträngen S1-S4, von denen jeweils die Stränge S1-S3 und die Stränge S2-S4 eng miteinander gekoppelt sind. Die eingezeichneten Strompfade zeigen mit ausgezogener Kontur den Betriebsstrom $I_B$ bei eingeschaltetem und an das speisende Netz angeschlossenem Wicklungsstrang S1 und mit gestrichelter Kontur den Freilaufstrom $I_{FR}$ kurz nachdem der Wicklungsstrang S1 durch den MOS-Transistor T1 abgeschaltet worden ist.

Die Weiterführung des abklingenden Stromes in den einzelnen Wicklungssträngen jeweils nach dem Abschalten der MOS-Transistoren T1-T4 durch die Inversdioden in den Transistoren T1-T4 der elektrisch jeweils um 180° versetzten Strangstromkreise ist gewährleistet, da diese Stromkreise durch die Anordnung in den gleichen Nuten eine sehr kleine magnetische Streuung zum betrachteten Strang hin haben können. Die Inversdioden begrenzen die Spannungsbeanspruchung der abschaltenden Transistoren auf etwa den doppelten Wert der Speisespannung, also auf den Wert, der als reguläre Sperrspannung sowieso unvermeidlich ist. Die Energie des geringen magnetischen Streufeldes läßt sich leicht in üblichen Schutzbeschaltungselementen auffangen.

Die Ansteuerung der MOS-Transistoren T1-T4 kann in Abhängigkeit von einer Rotorlage-Erfassungseinrichtung oder nach einem vorgegebenen Taktfrequenzprogramm erfolgen. Hierbei kann auch die in den Wicklungen induzierte Spannung nach Betrag und Phase als Stellungssignal ausgewertet werden.

**Patentansprüche**

1. Nach dem Reluktanz-Prinzip arbeitender Motor-Generator mit Schwungmassen-Rotor, mit folgenden Merkmalen :
a) Der Stator besteht aus über dem Umfang des Rotors in tangentialem Abstand zueinander verteilt angeordneten, magnetisch voneinander getrennten Sektorstatoren (SS),
b) jeder Sektorstator (SS) besteht aus zumindest zwei gleichartig gezahnten, in axialem Abstand (a) und mit axial fluchtenden Zähnen (SZ1-SZ8 bzw. SZ9-SZ16) hintereinander angeordneten Sektorstator-Elementen (SS1 bzw. SS2) mit gemeinsamen, in den Nuten zwischen den Zähnen untergebrachten und über eine elektronische Schaltvorrichtung (TG) kommutierten Arbeitswicklungen (Wicklungssträngen S1-S4),
c) jedes Sektorstator-Element (SS1 bzw. SS2) mündet in einem radial überstehenden Polschenkel (PS1 bzw. PS2), der jeweils von einem konzentrierten Erregerwicklungsteil (EW1 bzw. EW2) umschlungen ist,
d) die Polschenkel (PS1 ; PS2) zweier axial hintereinander angeordneter Sektorstator-Elemente (SS1 ; SS2) eines Sektorstators (SS) sind im Sinne entgegengesetzter Polarität erregt und radial außen durch ein Rückschlußjoch (J) verbunden,
e) der Rotor (Schwungscheibe KS) ist mit über seinem Umfang gleichmäßig verteilten, in magnetisch leitender Verbindung stehenden Zahnreihen mit jeweils einer mit dem Doppelten der Zahnteilung eines Sektorstator-Elementes übereinstimmenden Zahnteilung versehen, derart daß jeweils jeder Statorzahnreihe eine Rotorzahnreihe zugeordnet ist.

2. Nach dem Reluktanz-Prinzip arbeitender Motor-Generator, mit Schwungmassen-Rotor, mit folgenden Merkmalen :
a) Der Stator besteht aus über dem Umfang des Rotors in tangentialem Abstand zueinander verteilt angeordneten, magnetisch voneinander getrennten Sektorstatoren (SS),
b) jeder Sektorstator (SS) besteht aus zumindest zwei gleichartig gezahnten, in axialem Abstand (a) und mit axial fluchtenden Zähnen (SZ1-SZ8 bzw. SZ9-SZ16) hintereinander angeordneten Sektorstator-Elementen (SS1 bzw. SS2) mit in den Nuten zwischen den Zähnen untergebrachten und über eine elektronische Schaltvorrichtung (TG) kommutierten Arbeitswicklungen (Wicklungssträngen S1-S4), wobei die Zähne jedes Sektorstator-Elementes (SS1 bzw. SS2) jeweils einzeln von den ihnen zugeordneten Strängen umschlungen sind (Fig. 10),
c) jedes Sektorstator-Element (SS1 bzw. SS2) mündet in einem radial überstehenden Polschenkel (PS1 bzw. PS2), der jeweils von einem konzentrierten Erregerwicklungsteil (EW1 bzw. EW2) umschlungen ist,
d) die Polschenkel (PS1 ; PS2) zweier axial hintereinander angeordneter Sektorstator-Elemente (SS1 ; SS2) eines Sektorstators (SS) sind im Sinne entgegengesetzter Polarität erregt und radial außen durch ein Rückschlußjoch (J) verbunden,
e) der Rotor (Schwungscheibe KS) ist mit über seinem Umfang gleichmäßig verteilten, in magnetisch leitender Verbindung stehenden Zahnreihen mit jeweils einer mit dem Doppelten der Zahnteilung eines Sektorstator-Elementes übereinstimmenden Zahnteilung versehen, derart daß jeweils jeder Statorzahnreihe eine Rotorzahnreihe zugeordnet ist.

3. Reluktanzmotor nach Anspruch 1 oder 2, mit folgenden Merkmalen :
a) Die Zähne (SZ1-SZ8 bzw. SZ9-SZ16) jedes Sektorstator-Elementes sind gleichmäßig über jedes Sektorstator-Element und gleichartig in beiden Sektorstator-Elementen verteilt,
b) es sind zumindest zwei Sektorstatoren am Bohrungsumfang vorgesehen, wobei die beiden Sektorstatoren um ein ungerades Vielfaches der halben Statorzahnteilung (α) von der genauen Diametrallage abweichen,
c) die gesamte Arbeitswicklung besteht aus einer geraden Zahl von Strängen, wobei jeweils die halbe Zahl der Stränge (S1 ; S3 bzw. S2 ; S4) je einem der beiden Sektorstatoren zugeordnet ist (Fig. 7, 8).

4. Nach dem Reluktanz-Prinzip arbeitender Motor-Generator nach Anspruch 1 oder 2, mit folgenden Merkmalen :
a) die Zähne (SZ1-SZ4 bzw. SZ9-SZ12) der einen Hälfte jedes Sektorstator-Elementes (SS1 bzw. SS2) sind räumlich gegenüber den Zähnen (SZ5-SZ8 bzw. SZ13-SZ16) der anderen Hälfte dieses Sektorstator-Elementes durch einen mittigen, um eine halbe Zahnteilung (α) vergrößerten Zahnabstand um 90° el. versetzt angeordnet,
b) die Arbeitswicklung jedes Sektorstators (SS) ist als gradzahlig strängige Wicklung, insbesondere 4-strängige Wicklung mit jeweils um 90° el. gegeneinander versetzten Wicklungssträngen

(S1-S4) gleicher Spulenweite, ausgebildet (Fig. 1).

5. Reluktanzmotor nach einem der Ansprüche 1-4, mit folgendem Merkmal :

a) Die Rotorzähne (RZ1-RZ5 bzw. RZ6-RZ9) der beiden gleichartig über den gesamten Umfang gezahnten Rotorzahnreihen sind gegeneinander um die Hälfte des Zahnabstandes einer Rotorzahnreihe nach dem Prinzip « Zahn auf Lücke » versetzt (Fig. 1, 7).

6. Reluktanzmotor nach einem der Ansprüche 1-4, mit folgenden Merkmalen :

a) Jede Rotorzahnreihe ist über ihren Umfang mit einer gleichmäßigen Zahnteilung $2\alpha = 2 (360°/2p)$ (p = Polpaarzahl der Stator-Arbeitswicklung versehen,

b) die Rotorzahnreihen sind um den Winkel $2\alpha/m$ (m = Strang- bzw. Phasenzahl der Stator-Arbeitswicklung) gegeneinander am Umfang versetzt (Fig. 11).

7. Nach dem Reluktanz-Prinzip arbeitender Motor-Generator nach einem der Ansprüche 1 bis 6, mit folgendem Merkmal :

a) Bei einer mehr als zweisträngigen Arbeitswicklung sind jedem Zahn der Sektorstator-Elemente (SS1 bzw. SS2) zwei in Phasenopposition zueinander geschaltete Stränge (S1, S3 bzw. S2, S4 bei einer 4-strängigen Wicklung) der Arbeitswicklung zugeordnet (Fig. 3, 8).

8. Nach dem Reluktanz-Prinzip arbeitender Motor-Generator nach einem der Ansprüche 1 bis 7, mit folgendem Merkmal :

a) Jeder Wicklungsstrang ist in auf verschiedene Zähne verteilte, im Sinn einer Addition ihrer Teilspannungen hintereinander geschaltete Teilspulen aufgeteilt (Fig. 3).

9. Nach dem Reluktanz-Prinzip arbeitender Motor-Generator nach einem der Ansprüche 1 bis 8, mit folgendem Merkmal :

a) Der Rotor ist als Teil des Kupplungs-Schwungrades (KS), insbesondere der Verbrennungsmaschine eines Kraftfahrzeuges, ausgebildet.

10. Nach dem Reluktanz-Prinzip arbeitender Motor-Generator nach einem der Ansprüche 1 bis 7, mit folgendem Merkmal :

a) Für den Motor- als auch für den Generatorbetrieb sind die gleichen Arbeits- und Erregerwicklungen vorgesehen.

11. Nach dem Reluktanz-Prinzip arbeitender Motor-Generator nach einem der Ansprüche 1 bis 10, mit folgendem Merkmal :

a) Zur Kommutierung der aus einer Gleichspannungsquelle (PN), insbesondere einer Batterie gespeisten Wicklungsstränge (S1-S4) der Arbeitswicklung im Motorbetrieb, ist eine elektronische Schaltvorrichtung (TG) mit MOS-Transistoren (T1-T4) vorgesehen, deren Inversdioden (D1...) im Generatorbetrieb als Gleichrichterdioden zur Gleichrichtung des generatorischen Wechselstroms mitbenutzt sind.

12. Nach dem Reluktanz-Prinzip arbeitender Motor-Generator nach einem der Ansprüche 1 bis 11, mit folgendem Merkmal :

a) Jeder Strang der Arbeitswicklung ist im Motor- bzw. Generatorbetrieb betriebsmäßig nur jeweils von einem in einer Richtung fließenden Strom gespeist.

13. Nach dem Reluktanz-Prinzip arbeitender Motor-Generator nach einem der Ansprüche 1 bis 11, mit folgendem Merkmal :

a) Die zur Kommutierung der Wicklungsstränge (S1-S4) vorgesehenen elektronischen Schaltelemente (MOS-Transistoren : T1-T4) sind zusätzlich im Sinne einer Strombegrenzung taktbar.

14. Nach dem Reluktanz-Prinzip arbeitender Motor-Generator nach einem der Ansprüche 1 bis 13, mit folgendem Merkmal :

a) Bei Verwendung von MOS-Transistoren (T1-T4) als elektronischen Schaltelementen zur An- bzw. Abschaltung der Wicklungsstränge (S1-S4) zum Strom-Freilauf während der Abschaltzeiten der Wicklungsstränge (S1-S4) sind steuerbare Halbleiter, insbesondere ebenfalls MOS-Transistoren (T5-T8) mit in Reihe geschalteten Dioden (D5-D8), vorgesehen.

15. Nach dem Reluktanz-Prinzip arbeitender Motor-Generator nach einem der Ansprüche 1 bis 13, mit folgendem Merkmal :

a) Bei Verwendung von MOS-Transistoren (T1-T4) als elektronische Schaltelemente in der Schaltvorrichtung (TG) zur An- bzw. Abschaltung einer Arbeitswicklung mit zumindest vier Wicklungssträngen (S1 bzw. S2 bzw. S3 bzw. S4), von denen jeweils zwei in Gegenphase gespeiste Wicklungsstränge (S1 und S3 bzw. S2 und S4) eng miteinander magnetisch gekoppelt sind, ist zum Strom-Freilauf eines gerade abgeschalteten Wicklungsstranges der Strompfad über die Inversdiode des MOS-Transistors für den Wicklungsstrang vorgesehen, der mit dem gerade abgeschalteten Wicklungsstrang magnetisch eng gekoppelt und gegenüber diesem um 180° elektrisch versetzt ist (Fig. 9).

16. Nach dem Reluktanz-Prinzip· arbeitender Motor-Generator nach einem der Ansprüche 1 bis 15, mit folgendem Merkmal :

a) Der Motor-Generator ist als Innenrotor-Typ ausgebildet (Fig. 1, 2).

17. Nach dem Reluktanz-Prinzip arbeitender Motor-Generator nach einem der Ansprüche 1 bis 16, mit folgendem Merkmal :

a) Der Motor-Generator ist als Außenrotor-Typ ausgebildet.

18. Nach dem Reluktanz-Prinzip arbeitender Motor-Generator nach einem der Ansprüche 1 bis 17, mit folgendem Merkmal :

a) Das Rückschlußjoch (J) ist ungeblecht ausgebildet.

19. Nach dem Reluktanz-Prinzip arbeitender Motor-Generator nach einem der Ansprüche 1 bis 18, mit folgendem Merkmal :

a) Die Polschenkel (PS1 ; PS2) sind ungeblecht ausgebildet.

20. Nach dem Reluktanz-Prinzip arbeitender Motor-Generator nach einem der Ansprüche 1 bis 19, mit folgendem Merkmal :

a) Die Erregerwicklungen (EW1 bzw. EW2) sind als auf die Polschenkel (PS1 bzw. PS2) der Sektorstator-Elemente (SS1 bzw. SS2) von außen aufsteckbare Formspulen ausgebildet.

21. Nach dem Reluktanz-Prinzip arbeitender Motor-Generator nach einem der Ansprüche 1 bis 20, mit folgendem Merkmal :

a) Die Arbeitswicklungen (Wicklungsstränge S1-S4) sind als auf die Zähne der Sektorstatoren (SS) aufsteckbare Formspulen ausgebildet.

22. Nach dem Reluktanz-Prinzip arbeitender Motor-Generator nach einem der Ansprüche 1 bis 21, insbesondere nach Anspruch 17, mit folgendem Merkmal :

a) Zumindest ein Teil der Zähne (SZ1-SZ16) der Sektorstatoren (SS) sind jeweils als von dem übrigen Teil eines Sektorstators getrenntes Bauteil hergestellt und erst nach dem Aufbringen der Arbeitswicklung mit dem übrigen Teil ihres Sektorstators verbunden.

**Claims**

1. A motor-generator operating by the principle of reluctance with flywheel rotor, having the following features :

a) the stator consists of sector stators (SS) which are distributed around the periphery of the rotor with tangential spacing and which are magnetically separated from one another,

b) each sector stator (SS) consists of at least two similarly toothed sector stator elements (SS1 and SS2) arranged one behind the other with axial spacing (a) and with axially aligned teeth (SZ1-SZ8 and SZ9-SZ16) with common working windings (winding phases S1-S4) arranged in the slots between the teeth and commutated via an electronic switching device (TG),

c) each sector stator element (SS1 and SS2) leads to a salient pole shank (PS1 and PS2) which is embraced by a respective concentrated exciter winding part (EW1 and EW2),

d) the pole shanks (PS1 ; PS2) of two sector stator elements (SS1 ; SS2) of a sector stator (SS), arranged axially one behind the other, are excited with opposing polarities and are connected radially outwards by a return yoke (J),

e) the rotor (flywheel KS) is provided with rows of teeth, which are distributed uniformly over its periphery and are connected in magnetically conductive manner, with a respective tooth pitch corresponding to twice the tooth pitch of a sector stator element, in such a way that a row of rotor teeth is allocated to each respective row of stator teeth.

2. A motor-generator operating by the principle of reluctance with flywheel rotor, having the following features :

a) the stator consists of sector stators (SS) which are distributed around the periphery of the rotor with tangential spacing and which are magnetically separated from one another,

b) each sector stator (SS) consists of at least two similarly toothed sector stator elements (SS1 and SS2) arranged one behind the other with axial spacing (a) and with axially aligned teeth (SZ1-SZ8 and SZ9-SZ16) with working windings (winding phases S1-S4) arranged in the slots between the teeth and commutated via an electronic switching device (TG), the teeth of each sector stator element (SS1 and SS2) being embraced individually by the phases allocated to them in each case (Figure 10),

c) each sector stator element (SS1 and SS2) leads to a salient pole shank (PS1 and PS2) which is embraced by a respective concentrated exciter winding part (EW1 and EW2),

d) the pole shanks (PS1 ; PS2) of two sector stator elements (SS1 ; SS2) of a sector stator (SS), arranged axially one behind the other, are excited with opposing polarities and are connected radially outwards by a return yoke (J),

e) the rotor (flywheel KS) is provided with rows of teeth, which are distributed uniformly over its periphery and are connected in magnetically conductive manner, with a respective tooth pitch corresponding to twice the tooth pitch of a sector stator element, in such a way that a row of rotor teeth is allocated to each respective row of stator teeth.

3. A reluctance motor according to claim 1 or 2, having the following features :

a) the teeth (SZ1-SZ8 and SZ9-SZ16) of each sector stator element and similarly in both sector stator elements,

b) at least two sector stators are provided on the periphery of the bore, the two sector stators deviating from the precise diametral position by an uneven multiple of half the stator tooth pitch ($\alpha$),

c) the entire working winding consists of an even number of phases, half of the phases (S1 ; S3 and S2 ; S4) being allocated to each one of the two sector stators in each case (Figures 7, 8).

4. A motor-generator operating by the reluctance principle according to claim 1 or 2 having the following features :

a) the teeth (SZ1-SZ4 and SZ9-SZ12) of one half of each sector stator element (SS1 and SS2) are displaced spatially by 90 electrical degrees to the teeth (SZ5-SZ8 and SZ13-SZ16) of the other half of this sector stator element by a central tooth space which is enlarged by half a tooth pitch ($\alpha$),

b) the working winding of each sector stator (SS) is designed as a winding with an even number of phases, in particular as a 4-phase winding with winding phases (S1-S4) of equal coil width which are mutually displaced by 90 electrical degrees in each case (Figure 1).

5. A reluctance motor according to one of claims 1 to 4, having the following features :

a) the rotor teeth (RZ1-RZ5 and RZ6-RZ9) of the two rows of rotor teeth which are similarly toothed over the entire periphery are mutually displaced by half the tooth pitch of a row of rotor teeth according to the « tooth over gap » principle (Figures 1, 7).

6. A reluctance motor according to one of claims 1 to 4, having the following features :

a) each row of rotor teeth is provided over its periphery with a uniform tooth pitch $2\alpha = 2$

(360/2p) (p is the number of pairs of poles on the stator working winding),

b) the rows of rotor teeth are mutually displaced on the periphery by the angle 2α/m in which m is the number of phases of the stator working winding (Figure 11).

7. A motor-generator operating by the reluctance principle according to one of claims 1 to 6, having the following feature :

a) in the case of a working winding having more than two phases, there are allocated to each tooth of the sector stator elements (SS1 and SS2) two phases (S1, S3 and S2, S4 in the case of a 4-phase winding) of the working winding, which are connected in mutual phase opposition (Figures 3, 8).

8. A motor-generator operating by the reluctance principle according to one of claims 1 to 7, having the following feature :

a) each winding phase is divided into partial coils which are distributed over various teeth and are connected in series for addition of their partial voltages (Figure 3).

9. A motor-generator operating by the reluctance principle according to one of claims 1 to 8, having the following feature :

a) the rotor is designed as part of the clutch flywheel (KS), in particular of the internal-combustion engine of a motor vehicle.

10. A motor-generator operating by the reluctance principle according to one of claims 1 to 7, having the following feature :

a) the same working and exciter windings are provided for operation as motor and as generator.

11. A motor-generator operating by the reluctance principle according to one of claims 1 to 10, having the following feature :

a) an electronic switching device (TG) with MOS transistors (T1-T4) is provided for commutating the winding phases (S1-S4) of the working winding supplied from a d.c. voltage source (PN), in particular a battery, during operation of a motor, the inverse diodes (D1...) of these transistors also being used as rectifier diodes for rectifying the generator alternating current during operation as generator.

12. A motor-generator operating by the reluctance principle according to one of claims 1 to 11, having the following feature :

a) each phase of the working winding is supplied with current flowing only in one direction during operation as motor and only in the opposite direction during operation as generator.

13. A motor-generator operating by the reluctance principle according to one of claims 1 to 11, having the following feature :

a) the electronic switching elements (MOS transistors : T1-T4) provided for commutating the winding phases (S1-S4) can additionally be clocked for the purpose of current limitation.

14. A motor-generator operating by the reluctance principle according to one of claims 1 to 13, having the following feature :

a) when using MOS transistors (T1-T4) as electronic switching elements for switching on and off the winding phases (S1-S4), controllable semiconductors, in particular also MOS transistors (T5-T8) with series connected diodes (D5-D8), are provided to provide the free-wheeling current when the winding phases (S1-S4) are switched off.

15. A motor-generator operating by the reluctance principle according to one of claims 1 to 13, having the following feature :

a) when using MOS transistors (T1-T4) as electronic switching elements in the switching device (TG) for switching on and off a working winding with at least four winding phases (S1 and S2 and S3 and S4) of which two respective winding phases (S1 and S3 or S2 and S4) supplied in phase opposition are closely magnetically connected to one another, the current path via the inverse diode of the MOS transistor for opposite winding phase which is closely connected magnetically to the just disconnected winding phase and is displaced by 180 electrical degrees to it is provided for the free-wheeling current of a winding phase which has just been disconnected (Figure 9).

16. A motor-generator operating by the reluctance principle according to one of claims 1 to 15, with the following feature :

a) the motor-generator is designed as an internal rotor type (Figures 1, 2).

17. A motor-generator operating by the reluctance principle according to one of claims 1 to 16, having the following feature :

a) the motor-generator is designed as an external rotor type.

18. A motor-generator operating by the reluctance principle according to one of claims 1 to 17, having the following feature :

a) the return yoke (J) is unlaminated in construction.

19. A motor-generator operating by the reluctance principle according to one of claims 1 to 18, having the following feature :

a) the pole shanks (PS1 ; PS2) are unlaminated in design.

20. A motor-generator operating by the reluctance principle according to one of claims 1 to 19, having the following feature :

a) the exciter windings (EW1 and EW2) are designed as preformed coils which can be slipped on to the pole shanks (PS1 and PS2) of the sector stator elements (SS1 and SS2) from the exterior.

21. A motor-generator operating by the reluctance principle according to one of claims 1 to 20, having the following features :

a) the working windings (winding phases S1-S4) are designed as pre-formed coils which can be slipped on to the teeth of the sector stators (SS).

22. A motor-generator operating by the reluctance principle according to one of claims 1 to 21, in particular according to claim 17, having the following feature :

a) at least some of the teeth (SZ1-SZ16) of the sector stators (SS) are produced as components which are separate from the remainder of a sector stator and are connected to the remainder of their sector stator only after application of the working winding.

**Revendications**

1. Moteur-générateur fonctionnant selon le principe de la réluctance, ayant les caractéristiques suivantes :

a) le stator est constitué de stators en secteur (SS) répartis sur la périphérie du rotor, à distance tangentielle l'un de l'autre, et qui sont séparés magnétiquement l'un de l'autre,

b) chaque stator en secteur (SS) est constitué d'au moins deux éléments de stator en secteur (SS1 respectivement SS2), qui sont dentés de façon analogue, disposés à distance axiale (a) et avec des dents (SZ1-SZ8 respectivement SZ9-SZ16) axialement alignées, l'un derrière l'autre, avec des enroulements de travail communs (phases d'enroulement S1-S4), logés dans les encoches entre les dents et commutés par un dispositif de commande électronique (TG),

c) chaque élément de stator en secteur (SS1 respectivement SS2) aboutit dans une partie polaire faisant saillie radialement (PS1 respectivement PS2) qui est entourée chaque fois par une partie d'enroulement d'exécution concentrée (EW1 respectivement EW2),

d) les parties polaires saillantes (PS1 ; PS2) de deux éléments de stator en secteur (SS1 ; SS2) disposés axialement l'un derrière l'autre d'un stator en secteur (SS), sont excitées dans le sens de polarités opposées et sont reliées radialement à l'extérieur par une culasse de fermeture du circuit magnétique (J),

e) le rotor (volant d'inertie KS) est pourvu de rangées de dents uniformément réparties sur sa périphérie et qui sont en liaison de conduction magnétique, chaque fois avec un pas de dents correspondant au double du pas de dents d'un élément de stator en secteur, de telle manière qu'une rangée de dents du rotor soit coordonnée chaque fois à chaque rangée de dents du stator.

2. Moteur-générateur fonctionnant selon le principe de la réluctance, ayant les caractéristiques suivantes :

a) le stator est constitué de stators en secteur (SS) répartis sur la périphérie du rotor, à distance tangentielle l'un de l'autre, et qui sont séparés magnétiquement l'un de l'autre,

b) chaque stator en secteur (SS) est constitué d'au moins deux éléments de stator en secteur (SS1 respectivement SS2), qui sont dentés de façon analogue, disposés à distance axiale (a) et avec des dents (SZ1-SZ8 respectivement SZ9-SZ16) axialement alignées, l'un derrière l'autre, avec des enroulements de travail communs (phases d'enroulement S1-S4), logés dans les encoches entre les dents et commutés par un dispositif de commande électronique (TG), les dents de chaque élément de stator en secteur (SS1 respectivement SS2) étant chacune entourées individuellement par les phases coordonnées à elles (Fig. 10),

c) chaque élément de stator en secteur (SS1 respectivement SS2) aboutit dans une partie polaire faisant saillie radialement (PS1 respectivement PS2) qui est entourée chaque fois par une partie d'enroulement d'exécution concentrée (EW1 respectivement EW2),

d) les parties polaires saillantes (PS1 ; PS2) de deux éléments de stator en secteur (SS1 ; SS2) disposés axialement l'un derrière l'autre d'un stator en secteur (SS), sont excitées dans le sens de polarités opposées et sont reliées radialement à l'extérieur par une culasse de fermeture du circuit magnétique (J),

e) le rotor (volant d'inertie KS) est pourvu de rangées de dents uniformément réparties sur sa périphérie et qui sont en liaison de conduction magnétique, chaque fois avec un pas de dents correspondant au double du pas de dents d'un élément de stator en secteur, de telle manière qu'une rangée de dents du rotor soit coordonnée chaque fois à chaque rangée de dents du stator.

3. Moteur à réluctance selon la revendication 1 ou 2, ayant les caractéristiques suivantes :

a) les dents (SZ1-SZ8 respectivement SZ9-SZ16) de chaque élément de stator en secteur sont uniformément réparties sur chaque élément de stator en secteur et sont réparties de façon analogue dans les deux éléments de stator en secteur,

b) au moins deux stators en secteur sont prévus à la périphérie de l'alésage, les deux stators en secteur s'écartant de la position diamétrale exacte d'une quantité correspondant à un multiple impair de la moitié du pas de dents du stator (α),

c) l'ensemble de l'enroulement de travail est constitué d'un nombre pair de branches, la moitié du nombre des branches (S1 ; S3 respectivement S2 ; S4) étant coordonnée chaque fois à l'un des deux stators en secteur (Fig. 7, 8).

4. Moteur-générateur fonctionnant selon le principe de la réluctance, selon la revendication 1 ou 2, ayant les caractéristiques suivantes :

a) les dents (SZ1-SZ4 respectivement SZ9-SZ12) d'une des moitiés de chaque élément de stator en secteur (SS1 respectivement SS2) sont décalées dans l'espace par rapport aux dents (SZ5-SZ8 respectivement SZ13-SZ16) de l'autre moitié de cet élément de stator en secteur, de 90° électriques, par un espacement de dents central agrandi d'un demi-pas de dents (α),

b) l'enroulement de travail de chaque stator en secteur (SS) est réalisé comme un enroulement avec un nombre pair de phases, en particulier comme un enroulement à 4 phases dont les phases (S1-S4), de même largeur de bobine, sont chaque fois décalées mutuellement de 90° électriques (Fig. 1).

5. Moteur à réluctance selon une des revendications 1-4, ayant la caractéristique suivante :

a) les dents (RZ1-RZ5 respectivement RZ6-RZ9) des deux rangées de dents du rotor, dont la denture est analogue sur toute la périphérie, sont décalées les unes par rapport aux autres de la moitié de l'espacement des dents d'une rangée de dents du rotor, selon le principe « dent sur entredent » (Fig. 1, 7).

6. Moteur à réluctance selon une des revendications 1-4, ayant les caractéristiques suivantes :

a) chaque rangée de dents du rotor est pourvue, sur sa périphérie, d'un pas de dents uniforme $2\alpha = 2 (360°/2p)$ (p = nombre de paires de pôles de l'enroulement de travail du stator) et

b) les rangées de dents du rotor sont mutuellement décalées, à la périphérie, de l'angle $2\alpha/m$ (m = nombre de branches respectivement de phases de l'enroulement de travail du stator) (Fig. 11).

7. Moteur-générateur fonctionnant selon le principe de la réluctance, selon une des revendications 1-6, ayant la caractéristique suivante :

a) au cas où l'enroulement de travail comporte plus de deux phases, deux phases (S1, S3 respectivement S2, S4 dans le cas d'un enroulement à 4 phases) de l'enroulement de travail, phases qui sont connectées en opposition de phase l'une par rapport à l'autre, sont coordonnées à chaque dent des éléments (SS1 respectivement SS2) des stators en secteur (Fig. 3, 8).

8. Moteur-générateur fonctionnant selon le principe de la réluctance, selon une des revendications 1 à 7, ayant la caractéristique suivante :

a) chaque phase d'enroulement est partagée en bobines partielles qui sont réparties sur plusieurs dents et sont connectées l'une derrière l'autre dans le sens d'une addition de leurs tensions partielles (Fig. 3).

9. Moteur-générateur fonctionnant selon le principe de la réluctance, selon une des revendications 1 à 8, ayant la caractéristique suivante :

a) le rotor est réalisé comme une partie du disque d'embrayage-volant d'inertie (KS), en particulier du moteur à combustion interne d'un véhicule automobile.

10. Moteur-générateur fonctionnant selon le principe de la réluctance, selon une des revendications 1 à 7, ayant la caractéristique suivante :

a) les mêmes enroulements de travail et d'excitation sont prévus pour le fonctionnement en moteur et pour le fonctionnement en générateur.

11. Moteur-générateur fonctionnant selon le principe de la réluctance, selon une des revendications 1 à 10, ayant la caractéristique suivante :

a) pour la commutation au régime moteur des phases (S1-S4) de l'enroulement de travail, phases qui sont alimentées à partir d'une source de courant continu (PN), en particulier d'une batterie, il est prévu un dispositif de commande électronique (TG) avec des transistors MOS (T1-T4) dont les diodes inverses (D1...) sont utilisées en même temps, dans le régime générateur, comme diodes redresseuses pour le redressement du courant alternatif délivré par le générateur.

12. Moteur-générateur fonctionnant selon le principe de la réluctance, selon une des revendications 1 à 11, ayant la caractéristique suivante :

a) chaque phase de l'enroulement de travail est alimentée en service, en régime moteur et en régime générateur, par un courant qui circule seulement dans un sens.

13. Moteur-générateur selon le principe de la réluctance, selon une des revendications 1 à 11, ayant la caractéristique suivante :

a) les éléments de commande électroniques (transistors MOS (T1-T4) prévus pour la commutation des phases d'enroulement (S1-S4), peuvent, en plus, être enclenchés de façon rythmée dans le sens d'une limitation du courant.

14. Moteur-générateur fonctionnant selon le principe de la réluctance, selon une des revendications 1 à 13, ayant la caractéristique suivante :

a) en cas d'utilisation de transistors MOS (T1-T4) comme éléments de commande électroniques pour l'enclenchement respectivement de coupure des phases d'enroulement (S1-S4), des semiconducteurs commandés, constitués notamment aussi par des transistors MOS (T5-T8) avec des diodes (D5-D8) montées en série, sont prévus pour la circulation à roue libre du courant pendant les temps de coupure des phases d'enroulement (S1-S4).

15. Moteur-générateur fonctionnant selon le principe de la réluctance, selon une des revendications 1 à 13, ayant la caractéristique suivante :

a) en cas d'utilisation de transistors MOS (T1-T4) comme éléments de commande électroniques dans le dispositif de commande (TG), pour l'enclenchement respectivement la coupure d'un enroulement de travail avec au moins quatre phases d'enroulement (S1 respectivement S2 respectivement S3 respectivement S4) dont chaque fois deux phases (S1 et S3 respectivement S2 et S4) alimentées en opposition de phase, sont intimement couplées magnétiquement l'une à l'autre, il est prévu, pour la circulation à roue libre du courant d'une phase qui vient d'être coupée, de faire passer le trajet du courant par la diode inverse du transistor MOS pour la phase d'enroulement qui est intimement couplée magnétiquement à la phase qui vient d'être coupée et qui est électriquement décalée par rapport à celle-ci de 80° (Fig. 9).

16. Moteur-générateur fonctionnant selon le principe de la réluctance, selon une des revendications 1 à 15, ayant la caractéristique suivante :

a) le moteur-générateur est réalisé comme un moteur-générateur du type à rotor intérieur (Fig. 1-2).

17. Moteur-générateur fonctionnant selon le principe de la réluctance, selon une des revendications 1 à 16, ayant la caractéristique suivante :

a) le moteur-générateur est réalisé comme un moteur-générateur du type à rotor extérieur.

18. Moteur-générateur fonctionnant selon le principe de la réluctance, selon une des revendications 1 à 17, ayant la caractéristique suivante :

a) la culasse (J) de fermeture du circuit magnétique n'est pas feuilletée.

19. Moteur-générateur fonctionnant selon le principe de la réluctance, selon une des revendications 1 à 18, ayant la caractéristique suivante :

a) les parties polaires saillantes (PS1 ; PS2) ne sont pas feuilletées.

20. Moteur-générateur fonctionnant selon le principe de la réluctance, selon une des revendications 1 à 19, ayant la caractéristique suivante :

a) les enroulements d'excitation (EW1 respectivement EW2) sont réalisés comme des bobines formées sur gabarit, qui peuvent être emboîtées de l'extérieur sur les parties polaires saillantes (PS1 respectivement PS2) des éléments (SS1 respectivement SS2) de stator en secteur.

21. Moteur-générateur fonctionnant selon le principe de la réluctance, selon une des revendications 1 à 20, ayant la caractéristique suivante :

a) les enroulements de travail (phases d'enroulement (S1-S4) sont réalisés comme des bobines formées sur gabarit, qui peuvent être emboîtées sur les dents des stators en secteur (SS).

22. Moteur-générateur fonctionnant selon le principe de la réluctance, selon une des revendications 1 à 21, en particulier selon la revendication 17, ayant la caractéristique suivante :

a) au moins une partie des dents (SZ1-SZ16) des stators en secteur (SS) sont réalisées chacune comme une pièce séparée de la partie restante d'un stator en secteur et sont seulement reliées à la partie restante de leur stator en secteur après la mise en place de l'enroulement de travail.

FIG 1

FIG 2

FIG 3

FIG 4

FIG 5

FIG 6

FIG 7

AS1; ES3
(AS2; ES4)

FIG 8

ES1; AS3
(ES2; AS4)

FIG 9

FIG 10

FIG 11